**Europäisches Patentamt**

(19) **European Patent Office**

**Office européen des brevets**

(11) Veröffentlichungsnummer: **0 079 575**

**B1**

(12) **EUROPÄISCHE PATENTSCHRIFT**

(45) Veröffentlichungstag der Patentschrift:
05.11.86

(51) Int. Cl.⁴: **B 62 K 19/18**

(21) Anmeldenummer: **82110367.8**

(22) Anmeldetag: **10.11.82**

(54) **Verbindungen von aus Rohren hergestellten Teilen von Fahrradrahmen bzw. -gabeln sowie Verfahren zur Herstellung derselben.**

(30) Priorität: **12.11.81 DE 3145002**

(43) Veröffentlichungstag der Anmeldung:
**25.05.83 Patentblatt 83/21**

(45) Bekanntmachung des Hinweises auf die Patenterteilung:
**05.11.86 Patentblatt 86/45**

(84) Benannte Vertragsstaaten:
**AT BE CH DE FR GB IT LI LU NL SE**

(56) Entgegenhaltungen:
**DE-A-2 725 979**
**DE-C-809 768**
**DE-C-840 660**
**DE-C-939 848**
**FR-A-945 496**
**FR-A-2 033 068**

(73) Patentinhaber: **Grünfeld, Detmar, Am Brunnen 24, D-4980 Bünde 1 (DE)**

(72) Erfinder: **Grünfeld, Detmar, Am Brunnen 24, D-4980 Bünde 1 (DE)**

(74) Vertreter: **Fehners, Klaus Friedrich, Dipl.- Ing. Dipl.- Wirtsch.- Ing., Patentanwälte Dipl.- Ing. A. Wedde Dipl.- Ing. K. Empl Dipl.- Ing., Dipl.- Wirtsch.- Ing. K. Fehners Schumannstrasse 2, D-8000 München 80 (DE)**

LIBER, STOCKHOLM 1986

## Beschreibung

Die Erfindung betrifft Verbindungen von aus Rohren hergestellten Teilen von Fahrradrahmen bzw. -gabeln, insbesondere Steuerkopf-, Tretlager-, Sattelkopf- und Center-Verbindungen, wobei mindestens ein erstes Rohr mit seinem ausgeformten Endabschnitt mit dem Außenmantel eines zweiten Rohres durch umspritztes Material verbunden ist und wobei das Material die Verbindung vollständig umgibt, sowie ein Verfahren zur Herstellung derselben.

Solche aus der DE-A-2 725 979 (Fig. 6) bekannten Verbindungen werden im Fahrradrahmenbau als Ersatz für geschweißte, gelötete, geschraubte bzw. genietete Verbindungsstellen verwendet, welche insbesondere bei der Herstellung von stabilen Kinder- und Klapp-Fahrrädern wie auch bei modernen Aluminium-Fahrrädern benutzt werden.

Die eingangs erwähnten bekannten Verbindungen werden im Metall-Spritzgußverfahren an den miteinander zu verbindenden Endabschnitten der einzelnen Rohre hergestellt, wobei die Endabschnitte der Rahmen-Rohre beispielsweise in Form von Bördelungen ausgeformt und die offenen Enden mit Kappen verschlossen sind. Solche Fahrradrahmen besitzen zwar eine relativ hohe Festigkeit gegenüber statischer und dynamischer Belastung, nachteilig ist aber, daß die so hergestellten Verbindungen ein verhältnismäßig großes Gewicht aufweisen und damit dem heute üblichen Trend im Fahrradbau, nämlich möglichst leichte Fahrräder herzustellen, entgegenstehen.

Weiterhin nachteilig bei einem solchen Metall-Spritzgußverfahren ist der erhebliche Zeitaufwand. Darüber hinaus treten sehr hohe Spritz- bzw. Löttemperaturen von mehreren hundert Grad Celsius auf. Hierdurch können sich die fertiggestellten Rahmen und Gabeln verziehen und es macht sich eine Korrektur des Rahmens bzw. der Gabeln in Form des Ausrichtens notwendig. Darüber hinaus kann in Abhängigkeit des gewählten Verbindungsverfahrens eine bestimmte Wandungsdicke der Rohre nicht unterschritten werden, auch können für die Rahmen-Rohre keine aus Kunststoff hergestellten Bauteile verwendet werden.

Schließlich ist nachteilig, daß die Rahmen-Rohre nicht vor Herstellung der Metall-Spritzgußverbindungen lackiert werden können, der Lackiervorgang vielmehr erst nach Fertigstellung des Fahrradrahmens durchgeführt werden kann.

Aufgabe der Erfindung ist es, Verbindungen der eingangs genannten Art sowie ein Verfahren zur Herstellung solcher Verbindungen anzugeben, bei welchen die vorerwähnten Nachteilevermieden werden und die Möglichkeit gegeben ist, sowohl Stahl- und/oder Aluminium-Rohre als auch aus Kunststoff hergestellte Rohrabschnitte für den Fahrradrahmen zu verwenden. um dadurch das Gewicht solcher Rahmen bzw. Gestelle zu vermindern, wobei gleichzeitig das zeit- und energieaufwendige Verbinden der einzelnen Rahmenteile durch Umspritzen im Metallgußverfahren, aber die damit verbundenen hohen Spritz- und Löttemperaturen vermieden werden sollen.

Diese Aufgabe wird dadurch gelöst, daß bei Verbindungen von aus Rohren hergestellten Teilen von Fahrradrahmen bzw. -gabeln, insbesondere Steuerkopf-, Tretlager-, Sattelkopf- und Center-Verbindungen, bei welchen mindestens ein erstes Rohr mit seinem ausgeformten Endabschnitt mit dem Außenmantel eines zweiten Rohres durch umspritztes Material verbunden ist und wobei das Mateial die Verbindung vollständig umgibt, das Ende aufgeweitet und dem Außenmantel des zweiten Rohres unmittelbar anliegend, dreidimensional angepaßt ist und das umspritzte Material Kunststoff ist.

Solche Verbindungen sind mit wesentlich geringerem Zeit- und Energieaufwand herzustellen, insbesondere ist es aufgrund der niedrigen Herstellungstemperaturen möglich, die einzelnen Rahmen-Rohre bzw. Rahmen-Teile vor dem Zusammenbau bereits zu lackieren. Weiterhin sind solche Verbindungen bei gleicher Stabilität wesentlich leichter und tragen zu einer Veringerung des Gesamtgewichtes eines Fahrrades bei. Ein Verziehen des fertiggestellten Rahmens tritt aufgrund der niedrigen Herstellungstemperaturen nicht auf.

In Weiterbildung sind die aufgeweiteten Endabschnitte der jeweiligen Rohre auf den Außenmänteln der anschließenden Rohre aufgeklebt.

Hierdurch wird die Stabilität des Fahrradrahmens noch erhöht, gleichzeitig kann erreicht werden, daß ein Eindringen von Kunststoff durch den Umspritzungsvorgang in die offenen Endabschnitte der Rohre vermieden wird.

Vorteilhaft sind die Rohre aus Metall hergestellt, die den Rahmen bildenden Rohre können aber auch insbesondere aus Kunststoff hergestellt sein. Die Verwendung von Kunststoff-Rohren wird ebenfalls durch die niedrige Herstellungstemperatur ermöglicht.

In vorteilhafter Weiterbildung der Erfindung ist neben den den Fahrradrahmen bildenden Rohren auch der Hinterbau mit seinen Anschlußenden am Tretlager und am Sattelkopf in die aus Kunststoff hergestellten Umspritzungen mit eingebunden.

Die ebenfalls oben gestellte Aufgabe, ein zur Herstellung solcher Verbindungen geeignetes Verfahren zu schaffen, wird dadurch gelöst, daß bei einem solchen Verfahren die Enden der Rohre aufgeweitet und den Außenmänteln der jeweiligen anderen Rohre unmittelbar anliegend, dreidimensional angepaßt, daß die Rohre anschließend in vorbestimmter Ablängung und Anordnung zueinander in eine Spritzvorrichtung eingelegt bzw. gesetzt und daß die Rohre an den

Verbindungsstellen mit Kunststoff umspritzt werden.

In Weiterbildung dieses Verfahrens werden die auf die Außenmäntel der anderen Rohre treffenden Ränder der aufgeweiteten Endabschnitte der ersten Rohre mit einem geeigneten Klebstoff versehen, auf die Außenmäntel sich verklebend gepreßt und anschließend werden die Rohre an den Verbindungsstellen mit Kunststoff umspritzt.

Das vorerwähnte erfindungsgemäße Verfahren erlaubt eine erhebliche Einsparung von Zeit und Energiekosten, insbesondere erleichtert es aber den Lackiervorgang von Fahrradrahmen, da die einzelnen, insbesondere aus Metall bestehenden Rahmenteile bereits vor Herstellung der Verbindungen endgültig lackiert werden können.

Solche erfindungsgemäßen Verbindungen von aus Rohren hergestellten Teilen eines Fahrradrahmens sind in den Zeichnungen dargestellt. Es zeigen

Fig. 1 einen in der Rahmenebene liegenden Längsschnitt durch einen Steuerkopf,

Fig. 2 einen Längsschnitt durch einen Sattelkopf,

Fig. 3 einen Längsschnitt durch das Tretlager und

Fig. 4 eine Draufsicht gemäß IV in Fig. 3 auf das Tretlager, jedoch unter Weglassung der Verbindungsmuffe sowie des Hinterbaues.

Vor Herstellung der in den Figuren dargestellten einzelnen Verbindungen eines Fahrradrahmens werden die Rahmen-Rohre, nämlich Oberrohr 1, Unterrohr 3 und Sattelrohr 5 auf ihre vorbestimmten Längen abgelängt und an ihren offenen Endabschnitten 6', 6'', 7', 7'' und 8 aufgeweitet. In dieser vorbereiteten Form werden die vorstehend genannten Bauteile zusammen mit Steuerrohr 2 und Tretlagerrohr 4 in der Konfiguration des herzustellenden Fahrradrahmens in eine Kunststuff-Spritz-Vorrichtung eingelegt bzw. eingesetzt, wobei die aufgeweiteten Endabschnitte 6', 6'', 7', 7'' und 8' der Rahmen-Rohre 1, 3 bzw. 5 sich an die Außenmäntel des Steuerrohrs 2, des Tretlagerrohrs 4 bzw. des Sattelrohrs 5 anlegen. An diesen Berührungsstellen können die Rohre auch miteinander zur Erhöhung der Stabilität verklebt sein.

Anschließend werden die vorgenannten Rahmenteile an ihren Berührungsstellen, nämlich dem Steuerkopf 9, dem Tretlager 10 und dem Sattelkopf 11 mit Kunststoff umspritzt, so daß formstabile Verbindungen entstehen.

Bei Damenfahrrädern ist das Oberrohr 1 abgesenkt ausgebildet, so daß dessen Endabschnitt 6'' nicht wie bei dem in den Figuren dargestellten Herrenfahrrad-Rahmen unmittelbar unterhalb des Sattels mit dem Sattelrohr 5 verbunden ist, sondern die Verbindung als sog. Center-Verbindung näher zum Tretlagerrohr 4 hin angeordnet ist.

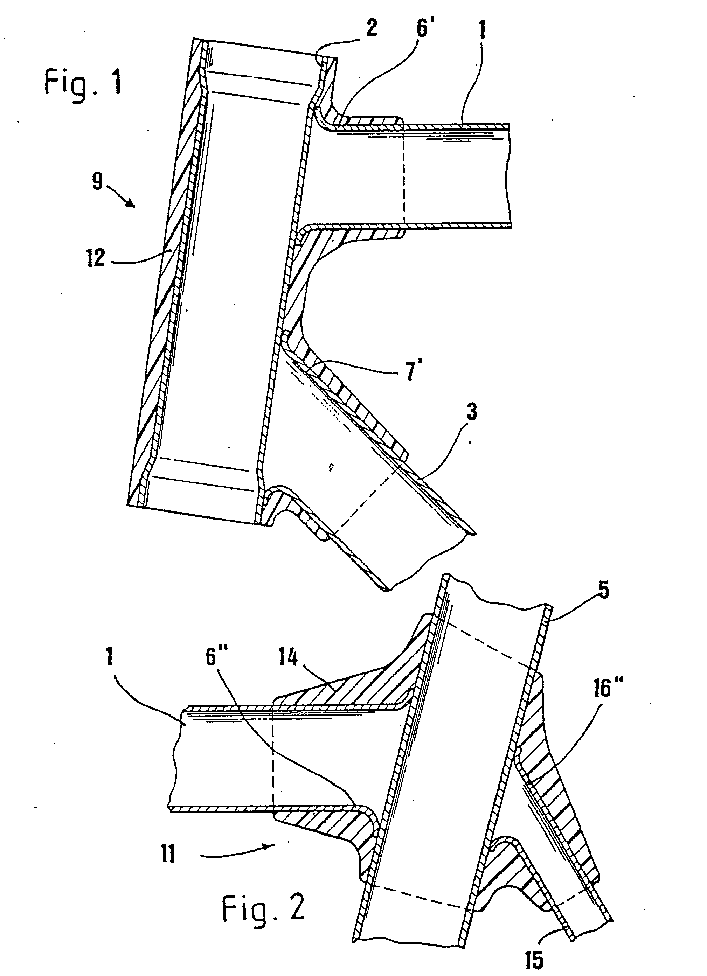

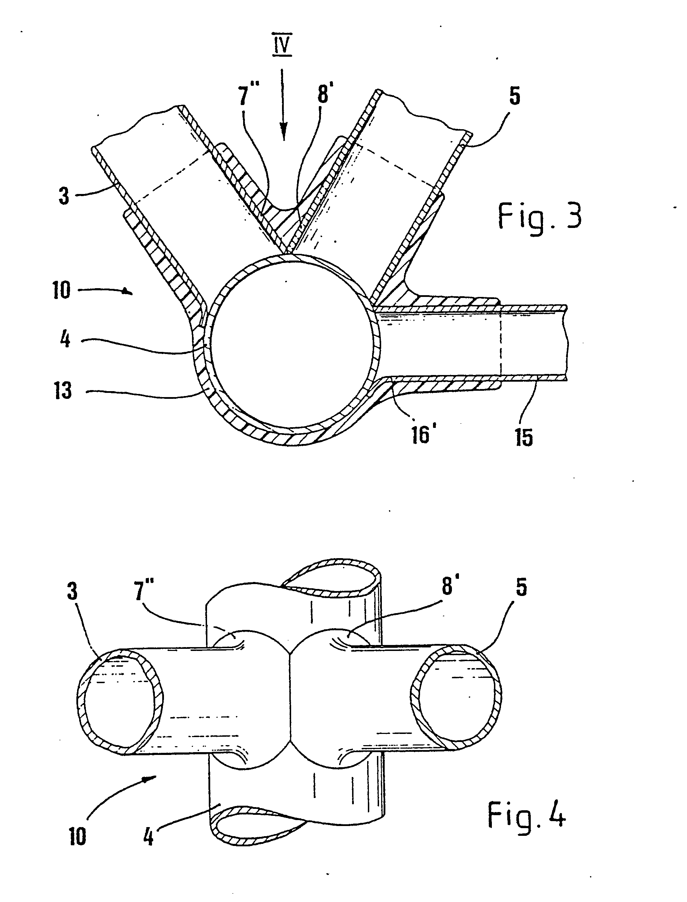

Der das Hinterrad eines Fahrrads aufnehmende Hinterbau 15, in den Fig. 2 und 3 lediglich mit seinen Anschlußenden 16' bzw. 16'' angedeutet, ist gleichzeitig mit den Rahmen-Rohren 1, 3 und 5 im Sattelkopf 11 bzw. im Tretlagerkopf 10 durch die Kunststoffumspritzung mit eingebunden.

Die Kunststoff-Umspritzungen sind in den Figuren mit Bezugsziffern 12, 13 und 14 bezeichnet.

Die Herstellung der Kunststoff-Umspritzungen an den beschriebenen Verbindungsstellen erfolgt innerhalb einer Kunststoff-Spritzvorrichtung, welche der Konfiguration eines Fahrradrahmens besonders angepaßt ist, in aus der Kunststofftechnik bekannter Weise.

**Patentansprüche**

1.) Verbindungen von aus Rohren hergestellten Teilen von Fahradrahnen bzw. -gabeln, insbesondere Steuerkopf-, Tretlager-, Sattelkopf- und Center-Verbindungen, wobei mindestens ein erstes Rohr mit seinem ausgeformten Endabschnitt mit dem Außenmantel eines zweiten Rohres durch umspritztes Material verbunden ist und wobei das Material die Verbindung vollständig umgibt, dadurch gekennzeichnet, daß das Ende (6' bzw. 6'', 7', 7'', 8', 8'') aufgeweitet und dem Außenmantel des zweiten Rohres (2 bzw. 4 bzw. 5) unmittelbar anliegend, dreidimensional angepaßt ist und daß das umspritzte Material (12, 13 bzw. 14) Kunststoff ist.

2.) Verbindungen nach Anspruch 1, dadurch gekennzeichnet, daß die aufgeweiteten Endabschnitte der jeweiligen Rohre auf den Außenmanteln der anschließenden Rohre aufgeklebt sind.

3.) Verbindungen nach Anspruch 1, dadurch gekennzeichnet, daß die Rohre aus Metall hergestellt sind.

4.) Verbindungen nach Anspruch 1, dadurch gekennzeichnet, daß die Rohre (1 bzw. 3 bzw. 5) aus Kunststoff hergestellt sind.

5.) Verbindungen nach Anspruch 1, dadurchgekennzeichnet, daß neben den Rohren (1 bzw. 3 bzw. 5) auch der Hinterbau (15) mit seinen Anschlußenden (16' bzw. 16'') am Tretlager (10) und am Sattelkopf (11) in die aus Kunststoff hergestellten Umspritzungen (13 bzw. 14) mit eingebunden ist.

6.) Verfahren zur Herstellung von Verbindungen nach einem der Ansprüche 1 bis 5, dadurch gekennzeichnet, daß die Enden der Rohre (1 bzw. 3 bzw. 5) aufgeweitet und den Außenmänteln der jeweiligen anderen Rohre (2 bzw. 4 bzw. 5) unmittelbar anliegend, dreidimensional angepaßt, daß die Rohre anschließend in vorbestimmter Ablängung und Anordnung zueinander in eine Spritzvorrichtung eingelegt bzw. -gesetzt und daß die Rohre an den Verbindungsstellen mit Kunststoff umspritzt werden.

7.) Verfahren nach Anspruch 6, dadurch gekennzeichnet, daß die auf die Außenmäntel der Rohre (2 bzw. 4 bzw. 5) treffenden Ränder der aufgeweiteten Endabschnitte der Rohre (bzw.3 bzw.5) mit geeignetem Klebstoff versehen, auf die Außenmäntel sich verklebend gepreßt und anschließend die Rohre an den Verbindungsstellen mit Kunststoff umspritzt werden.

## Claims

1.) Connections of parts, made from tubes, of bicycle frames or forks, in particular steering-head, bottom bracket-bearing, saddle-head and centre connections, at least a first tube being connected by its shaped end section to the outer sleeve of a second tube by means of sheathed material and the material completely surrounding the connection, characterized in that the end (6' or 6'', 7', 7'', 8', 8'') is widened and is adapted three-dimensionally to the outer sleeve of the second tube (2 or 4 or 5, respectively), which it directly adjoins, and in that the sheathed material (12, 13 and 14) is plastic.

2.) Connections according to Claim 1, characterized in that the widened end sections of the respective tubes are adhesively joined on the outer sleeves of the following tubes.

3.) Connections according to Claim 1, characterized in that the tubes are made of metal.

4.) Connections according to Claim 1, characterized in that the tubes (1 and 3 and 5) are made of plastic.

5.) Connections according to Claim 1, characterized in that, apart from the tubes (1 and 3 and 5), the rear structure (15) is also encapsulated in the sheathings (13 and 14) made from plastic, at the bottom bracket bearing (10) and at the saddle head (11) by its attachment ends (16' and 16'' respectively).

6.) Process for the manufacture of connections according to one of Claims 1 to 5, characterized in that the ends of the tubes (1 and 3 and 5) are widened and are adapted three-dimensionally to the outer sleeves of the respective other tubes (2 and 4 and 5), which they directly adjoin, in that the tubes are subsequently laid or inserted in predetermined lengths and mutual arrangement into an injection-moulding device and in that the tubes are sheathed in plastic at the connection points.

7.) Process according to Claim 6, characterized in that the edges of the widened end sections of the tubes (1 and 3 and 5) which come into contact with the outer sleeves of the tubes (2 and 4 and 5, respectively) are provided with suitable adhesive, pressed onto the outer sleeves so that they bond and the tubes are subsequently sheathed in plastic at the connection points.

## Revendications

1. Raccords d'assemblage de parties fabriquées en tubes de cadres ou de fourches de bicyclettes, en particulier des raccords du tube de direction, du pédalier, du tube de la selle et au centre, un premier tube au moins étant assemblé par une matière appliquée par pulvérisation par sa section d'extrémité façonnée à l'enveloppe externe d'un deuxième tube et ladite matière entourant totalement le raccord, caractérisés par le fait que l'extrémité (6', 6'', 7', 7'', 8', 8'') est élargie et ajustée à l'enveloppe extérieure du deuxième tube (2, 4 ou 5) de manière à s'y appliquer directement dans les trois dimensions et par le fait que la matière appliquée par pulvérisation (12, 13, 14) est de la matière plastique.

2. Raccords d'assemblage selon la revendication 1, caractérisés par le fait que les sections d'extrémité élargies des tubes respectifs sont collées sur les enveloppes extérieures des tubes à raccorder.

3. Raccords d'assemblage selon la revendication 1, caractérisés par le fait que les tubes sont fabriqués en métal.

4. Raccords d'assemblage selon la revendication 1, caractérisés par le fait que les tubes (1 ou 3 ou 5) sont fabriqués en matière plastique.

5. Raccords d'assemblage selon la revendication 1, caractérisé par le fait qu'outre les tubes (1, 3 ou 5) la structure arrière 15 avec ses extrémités de raccordement (16' ou 16'') sur le pédalier (10) et sur le tube de selle (11), est elle aussi incluse dans les moulages (13 ou 14) réalisés en matière plastique.

6. Procédé pour la fabrication de raccords d'assemblage selon l'une des revendications 1 à 5, caractérisé par le fait que les extrémités des tubes (1, 3 ou 5) sont élargies et ajustées aux enveloppes extérieures des autres tubes respectifs (2, 4 ou 5) de manière à s'y appliquer directement dans les trois dimensions, par le fait que les tubes sont placés ou insérés dans un dispositif de montage par injection dans des longueurs et une disposition correspondante prédéterminées et par le fait que l'on pulvérise de la matière plastique sur les points de raccordement des tubes.

7. Procédé selon la revendication 6, caractérisé par le fait que les sections d'extrémité élargies des tubes (1, 3 ou 5) qui entrent en contact avec les enveloppes extérieures des tubes (2, 4 ou 5) sont revêtues d'une matière plastique appropriée, qu'elles sont pressées sur les enveloppes extérieures de façon à réaliser un collage et qu'une pulvérisation de matière plastique est ensuite appliquée sur les tubes aux points de raccordement.

Fig. 1

Fig. 2

Fig. 3

Fig. 4